# EUROPEAN PATENT SPECIFICATION

(11) **EP 0 293 492 B1**
(45) Date of publication and mention of the grant of the patent: **13.04.1994**
(21) Application number: 88900094.9
(22) Date of filing: 11.12.1987
(51) Int. Cl.: H04N 5/782

(54) **TV PROGRAM RECORDING SYSTEM**
SYSTEM ZUM AUFZEICHNEN VON FERNSEHPROGRAMMEN
SYSTEME D'ENREGISTREMENT DE RPOGRAMMES DE TELEVISION

(30) Priority: 11.12.1986 JP 295272/86
(43) Date of publication of application: 07.12.1988
(73) Proprietor: KABUSHIKI KAISHA TOSHIBA, Kawasaki-shi, Kanagawa-ken 210 (JP)
(72) Inventor: YAMADA, Takeo, Fukaya-shi, Saitama-ken 366 (JP)
(74) Representative: Henkel, Feiler, Hänzel & Partner
(86) International application number: JP8700964
(87) International publication number: WO8804506

(56) References cited:
- EP-A- 0 118 104
- EP-A- 0 255 107
- DE-C- 3 313 799
- JP-A-62 110 379
- JP-A-62 230 227

## Description

The present invention relates to a TV program recording system for a VCR (Video Cassette Recorder), and, more particularly, to a system improved in such a way that it can accomplish program recording even when the ending time of a broadcasting program has been changed.

Recently, in West Germany in particular, a VPS (Video Program System) has been developed for (reserved) recording of TV broadcasting programs in the VCR. This VPS broadcasts a program with data of the program on the air being superimposed during one H (horizontal) period of the 16th line of a TV broadcasting signal, i.e., the vertical blanking period. Based on this data, receivers would record the desired TV broadcasting program. Such a TV program recording system is disclosed in German Patent DE-C-2661055.

According to the invention disclosed in the mentioned West German Patent 2661055, an identification signal indicating a broadcasting program is transmitted together with a broadcasting program. A receiver's device, which has been given an identification signal of the desired broadcasting program in advance, extracts the identification signal in the broadcasting signal, compares it with the input data, and activates a receiver when they coincide with each other. This identification signal is transmitted during the vertical blanking period over the entire broadcasting period of the broadcasting program.

The identification signal includes the start time of the broadcasting program.

Similar VPSs are disclosed in German Patent DE-C-3328001 and West German Patent Disclosure 2950432. German Patent DE-C-3038088 discloses a technique for extracting data, such as program data superimposed during the vertical blanking period of a television signal, using a computer; the invention disclosed here teaches that a computer provides a gate signal for extraction of the data and stores the data in a memory.

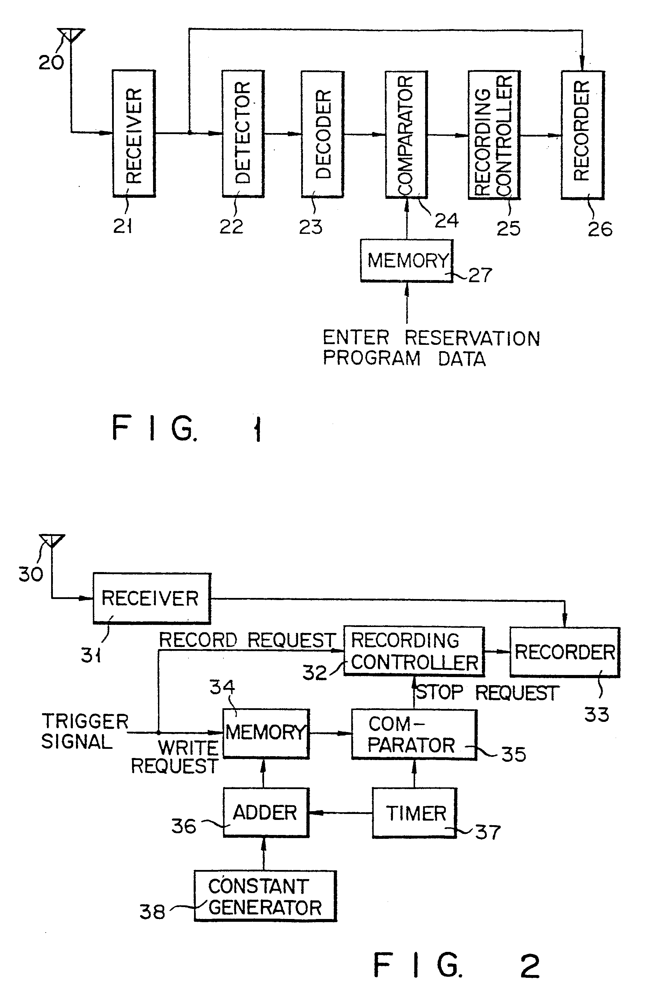

Fig. 1 exemplifies a reserved recording device for use in a video tape recorder (hereinafter called VTR) as a recording system which is based on the aforementioned VPS. This device is associated with the VPS patented in West Germany and is adaptable to television broadcasting signals currently used in the country. That is, West Germany employs a system in which, based on the VPS, program identification data is assigned to each program and is transmitted in prior to the broadcasting of the program. The program identification data is superimposed as digital data on the aforementioned specific line during the vertical blanking period of a video signal. In order to identify a program, therefore, it is necessary to detect the program identification data on the specific line.

Accordingly, the device in Fig. 1 is designed to execute a reserved recording using the program identification data. Reservation program data for a program to be reserved is entered and stored through a key-input device (not shown) in a memory 27. This reservation program data consists of a broadcasting channel number for the program, a information-broadcasting day of a week, information recording start time (broadcasting start time) data, recording end time (broadcasting end time) data and VPS recording mode data indicating a VPS-based reserved-recording program. A received television signal from an antenna 20 becomes a video signal of a base band in a receiver 21, and the video signal is in turn supplied to a recorder 26. A program identification signal on a specific line is detected by a detector 22 and is then decoded by a decoder 23. A comparator 24 compares the decoded program identification data with the reservation program identification data stored in memory 27, and, if they coincide with each other, the comparator outputs a coincidence signal to a memory controller 25. That is, as the program identification data includes data indicating the broadcasting start time of the program, when the broadcasting start time data coincides with recording start time data, comparator 24 outputs a coincidence signal.

The broadcasting start time data of the program identification data is standardized in such a way that it is not changed even when the broadcasting time is changed and retains the original broadcasting start time data. This ensures the recording of a program according to the broadcasting. Memory controller 25 sets recorder 26 in a recording mode in response to the coincidence signal. When the transmitted program identification data does not coincide with the reservation program identification data, a non-coincidence signal is outputted. In response to this signal, recording controller 25 controls recorder 26 in a recording stop mode.

As described above, the device shown in Fig. 1 can accurately record a program to be recorded from the start time to the end time, even when the broadcasting time is changed. With this device, however, it is necessary to input program reservation data in memory 27, which requires the troublesome operation of input keys a number of times and cannot prevent the generation of input errors. Therefore, when a user needs to leave a receiver, for example, in accurately recording a program presently on the air until it ends, it is necessary to execute the recording operation based on the reserved recording. This requires a troublesome operation. Easy Execution of an operation needed for reserved recording (programming) is proposed in West German Patent 3335082, West German Patent Disclosure 2757264, etc. The former one is based on a VPV (Video Programming by Videotext) and the latter is based on an optical reader. Although either one can ensure programming with an easy operation, it cannot show a sufficient ability when the programming becomes suddenly necessary as mentioned above.

There is a reserved recording device, which, unlike the mentioned VPS, does not utilize program identification data and executes recording by setting only a recording time.

Fig. 2 exemplifies such a device. A television signal received at a receiver 31 becomes a video signal of a base band and is supplied to a recorder 33. The start and stop of recording of this recorder 33 is controlled as follows. First, a trigger signal is supplied from a timer device (not shown) to a recording circuit 34 and a recording controller 32. In response to the trigger signal, recording controller 32 sets recorder 33 in a recording mode, and, from this point, the recording starts.

Upon reception of the trigger signal, memory 34 stores end time data from an adder 36. This end time data can be prepared by adding data from a constant generator 38 to present time data of a timer 37. For instance, with a 30-minute program, a constant for 30 minutes is generated by depressing a constant generation key (not shown) of constant generator 38 once, and data of 30 minutes is added to the present time, thereby setting the end time data. Accordingly, with a one-hour program, the mentioned key needs to be depressed twice. In this manner, the end time at which a program is expected to end is set from the point (present time) when the trigger signal is generated, and this end time data is stored in memory 34. A comparator 35 compares the end time data with the present time data from timer 37, and outputs a recording stop command signal to recording controller 32 when they coincide each other.

As described above, the device in Fig. 2 starts recording by a trigger signal and stops the recording operation at a time at which a program is expected to end.

According to the device in Fig. 2, however, the time from the generation of the trigger signal to the recording stop state is fixed in advance by constant generator 38. As a result, when the starting time of a program is as scheduled, but if the end time is extended, the last part of the program would not be undesirably recorded. In a sports (baseball) program or the like in particular, the broadcasting time may be extended or shortened, and it is inconvenient if the recording time is predetermined as is done with the device in Fig. 2. In this respect, the device shown in Fig. 1 continues the recording operation as long as the coincidence of program identification data is attained, so that no problem arises upon extension or shortening of the broadcasting time; however, as explained earlier, the device shown in Fig. 1 needs a complicated programming operation which is not desirable.

Earlier European application 87 110 917.9 (corresponding to EP-A-0 255 107) discloses a program mode setting apparatus which comprises a VPS setting switch, a VPS decoder, a code latch circuit, a VPS control circuit and a code memory. When the VPS setting switch is turned on while a recording means is ready for recording, the VPS decoder detects a VPS code out of a video signal and the VPS code is stored in the code memory. Thereafter, the VPS code detected by the VPS decoder is applied to the code latch circuit. The VPS control circuit compares the VPS code of the code latch circuit with the VPS code stored in the code memory and stops the recording means when both do not coincide with each other.

It is an object of this invention to provide a TV program recording system, which can ensure the recording state for a desired program with a simple operation and can surely record all of the desired program even if its desired broadcasting time is extended or shortened.

To solve this object the present invention provides a TV program recording system as specified in claim 1 or 3.
Figs. 1 and 2 are block diagrams respectively illustrating conventional program recording devices, Fig. 1 showing an example according to a VPS while Fig. 2 shows an example not according to the VPS; and
Fig. 3 is a block diagram illustrating a TV program recording system according to one embodiment of this invention.

### [Best Mode of Carrying Out the Invention]

An embodiment of this invention will be described below referring to the accompanying drawings.

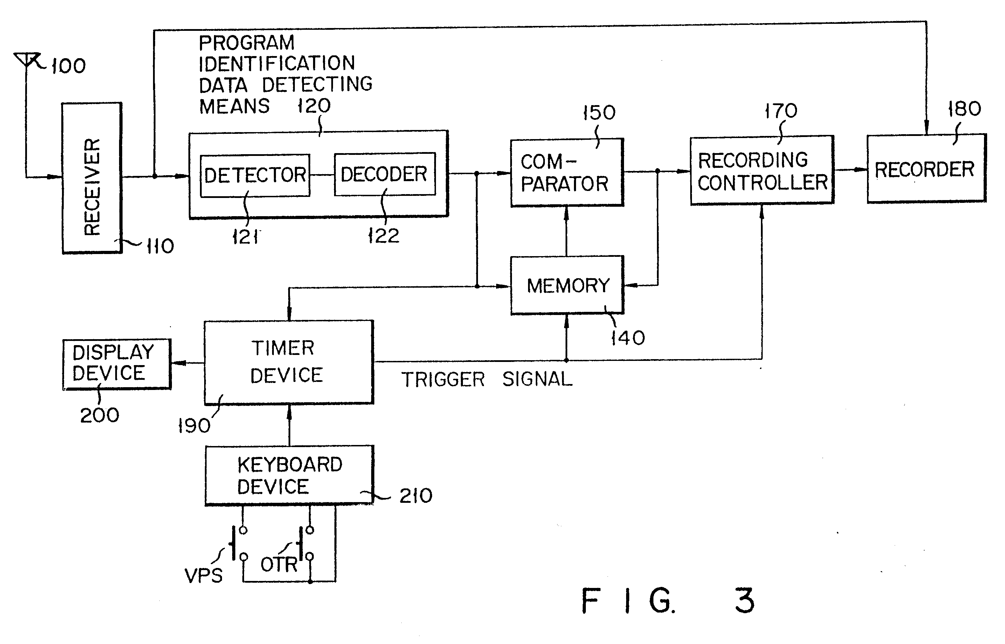

Fig. 3 illustrates one embodiment of this invention; a television signal on a desired channel which is tuned to the desired channel and received by a receiver 110 through an antenna 100, is based on the aforementioned VPS system and has program identification data superimposed thereon. The program identification data is transmitted superimposed on a specific horizontal line during, for example, a vertical blanking period. A base band video signal from receiver 110 is supplied to a video recorder 180, which is set in a recording mode or recording stop mode in response to a control signal from a recording controller that comprises a latch circuit, or the like.

Further, the base band video signal from receiver 110 is supplied to a program identification data detecting means 120 for detecting its program identification data. This program identification data detecting means 120 extracts a signal on a specific line during the vertical blanking period and executes a data conversion. A detector 121 is its extracting section and a decoder 122 is its data converting section. Program identification data acquired by program identification data detecting means 120 is supplied to a comparator 150, a memory 140 and a timer device 190.

With regard to the contents of program identification data according to the aforementioned VPS system, the data includes scheduled-broadcasting start month, day and time, a country code of a broadcasting station, a program source code and an audio-multiplex/stereo/mono discrimination code, which are assigned to each program announced in advance on a TV guide, etc. Actually, of a data line consisting of 1-15 word data assigned for a VPS, 11th-14th data words (each word consisting of 8 bits; 0-31 label bits) are used for data insertion.

Specifically, label bits 1 and 2 are an address range, bits 2-6 are DAY data, bits 7-10 are MONTH data, bits 11-15 are HOUR data, bits 16-21 are MINUTE data, bits 22-25 are a country code, and bits 26-31 are a program source code. For a special purpose, the 11th-14th data words are used to provide, as a special system code, a system status code, a dummy code and an interruption code.

Therefore, it is necessary to constitute detector 121 and decoder 122, which serve as the aforementioned program identification data detecting means 120, comparator 150 and memory 140, in accordance with the contents of the mentioned program identification data. And their basic structures may be provided utilizing the techniques disclosed in the aforementioned individual West German patents.

Referring again to Fig. 3, the storage timing of memory 140 is when a trigger signal is inputted from timer device 190. That is, only upon reception of the trigger signal, memory 140 stores the program identification data broadcasted at this point of time.

Assuming now that a trigger signal is generated, the program identification data at this point is stored in memory 140. The trigger signal is supplied to recording controller 170 as a recording request signal. Therefore, recorder 180 starts recording a program presently on the air. At this time, the program identification data stored in memory 140 is compared with program identification data transmitted presently or a later point of time by comparator 150. Since the stored program identification data is what is stored just previously, comparator 140 naturally provides a coincidence signal, which is supplied to recording controller 170 as a recording permit signal. Therefore, recorder 180 continues the recording state. Assuming now that at this time, the program has ended and another program has started, then, the contents of the program identification data are changed or the program identification data would not be present. Consequently, comparator 150 provides a non-coincidence signal which is supplied to recording controller 170 and memory 140. This non-coincidence signal is a recording stop and memory reset command signal, which stops the recording operation of recorder 180 and resets the stored contents of memory 140.

Timer device 190 is of a type which generates a trigger signal by a user's execution of a key (recording) operation. A generally so-called one-touch timer, i.e., the one which is set with predetermined units of time like constant generator 38 shown in Fig. 2, and outputs a trigger signal for the set time by the execution of a key (recording) operation, may be used for this timer device 190. In this case, although the trigger signal is being outputted only for the set time, the recording state is maintained by recording controller 170 while there exists the coincidence output of comparator 150.

A display device 200 displays the operation state of timer device 190 or a program identification data signal.

According to this invention as described above, timer device 190 starts functioning by a signal entered through a keyboard 210 by the key operation by the user. First, with a VPS key on keyboard 210 being depressed, it is discriminated whether or not program identification data exists in the output of decoder 122. Display device 200 displays that this discrimination task is being carried out. For instance, a section marked "VPS" blinks. The discrimination results in the presence of the program identification data, the broadcasting start time included in the data is displayed on display device 200. If the program identification data is not present, display device 200 conducts an error display to display that the recording utilizing the VPS is not possible.

When the user, after confirming the presence of the program identification data through display device 200, depresses an OTR (One Touch Recording) key on keyboard 210, timer device 190 outputs a trigger signal. Timer device 190 has a microprocessor for accepting an input from keyboard 210, a discrimination and driving display device 200.

Then, memory 140 stores the program identification data at the time the trigger signal is supplied or at the time a reserved program starts, and this data and program identification data sequentially transmitted thereafter are compared with each other by comparator 150. As long as the coincidence signal is outputted from comparator 150, the recording state is maintained.

The TV program recording system according to the embodiment of this invention comprises detection means for receiving a television signal, which is broadcasted with predetermined program identification data superimposed during a specific period of a video signal in prior to the broadcasting of a program in a television broadcasting, and detecting the program identification data; memory means for storing program identification data from the detection means; comparison means for comparing the program identification data from the detection means with the program identification data stored in the memory means; comparison means for outputting a recording operation permit signal to a video recorder where a coincidence signal is outputted from the comparison means and outputting a recording stop command signal to the video recorder when a non-coincidence signal is outputted from the comparison means; and timer means for generating a trigger signal, generating a program data storage command signal to the memory means and outputting a recording start command signal to the video signal recorder, whereby recording starts by a timer and after the recording has started, the recording time is set by the program identification data. Therefore, even if the broadcasting time for a program is extended for some reason, the recording state will not be forcibly stopped. Therefore, the recording state can be surely maintained until the program ends without missing the extended second half portion of the program. If a program ends earlier than scheduled, the recording ends accordingly.

The above device needs only a key operation for program recording so that a program reservation can be made with a simple operation.

This invention, as described above, a TV program recording system, can ensure the recording state for a desired program with a simple operation and can surely record all of the desired program even if the broadcasting time of the desired program is extended or shortened.

The TV program recording system according to this invention can apply to anything which includes a receiver and a recorder of a TV broadcasting system that utilizes, like the VPS system used in the TV broadcasting system in West Germany, for example, a system for superimposing program identification data relating to a program on the air during a specific period of a TV broadcasting signal and broadcasting it.

## Claims

1. A TV program recording system comprising
- detection means (120) for receiving a television signal having program identification data superimposed on a predetermined portion thereof and detecting said program identification data,
- memory means (140) for storing desired program identification data for recording of said television signal,
- comparison means (150) for comparing said desired program identification data from said memory means (140) with said program identification data from said detection means (120),
- control means (170) for controlling an operation of a recording device (180) for recording said television signal in accordance with an output of said comparison means (150),
- timer means (190) for providing a start trigger for a recording request and a storage request to said control means (170) and said memory means (140) at a predetermined timing, wherein:
- said memory means (140) stores said program identification data output from said detection means (120) at said predetermined timing as said desired program identification data, in accordance with said storage request from said timer means (190);
- said comparison means (150) sequentially compares said program identification data output from said detection means (120) at a timing thereafter with said program identification data at said predetermined timing;
- said control means (170) starts a recording operation of said recording device (180) in accordance with a recording request from said timer means and controls said recording device (180) to continue said recording operation thereof while being supplied with a coincidence output from said comparison means (150), and
- said comparison means (150) supplies a reset command signal for resetting a storage content to said memory means (140) when said coincidence output is not attained.

2. The TV program recording system according to claim 1, characterized in that said timer means (190) is a one touch timer device.

3. A TV program recording system comprising:
detection means (120) for receiving a television signal having program identification data superimposed on a predetermined portion thereof, and for detecting said program identification data;
memory means (140) for storing desired program identification data for recording of said television signal;
comparison means (150) for comparing said desired program identification data from said memory means (140) with said program identification data from said detection means (120); and
control means (170) for controlling an operation of a recording device (180) for recording said television signal in accordance with an output of said comparison means (150), wherein
said TV program recording system further comprises trigger means (190) for providing a storage request to said memory means (140);
said memory means (140) stores said program identification data from said detection means (120) as said desired program identification data, in response to the storage request provided by said trigger means (190);
said comparison means (150) compares program identification data subsequently output from said detection means (120) with said program identification data from said memory means (140);
said control means (170) controls the recording device (180) to continue a recording operation while the control means (170) is kept supplied with a coincidence output from the comparison means (150); and
said comparison means (150) supplies said memory means (140) with a reset signal for resetting storage contents in the memory means (140), when said coincidence output is not attained.

## Patentansprüche

1. System zum Aufzeichnen von Fernsehprogrammen mit
einer Erkennungseinrichtung (120) zum Empfangen eines Fernsehsignals, das Programmidentifizierungsdaten hat, die auf einem vorbestimmten Teilbereich davon überlagert sind, und zum Erkennen der Programmidentifizierungsdaten,
einer Speichereinrichtung (140) zum Speichern von gewünschten Programmidentifizierungsdaten zum Aufnehmen des Fernsehsignals,
einer Vergleichseinrichtung (150) zum Vergleichen der gewünschten Programmidentifizierungsdaten von der Speichereinrichtung (140) mit den Programmidentifizierungsdaten von der Erkennungseinrichtung (120),
einer Steuereinrichtung (170) zum Steuern eines Betriebs einer Empfangsvorrichtung (180) zum Aufnehmen des Fernsehsignals gemäß einem Ausgang der Vergleichseinrichtung (150),
einer Takt- bzw. Zeitgebereinrichtung (190) zum Bereitstellen eines Startauslösers für eine Aufnahmeanforderung und eine Speicherungsanforderung an die Steuereinrichtung (170) und die Speichereinrichtung (140) zu einem vorbestimmten Zeitpunkt, worin
die Speichereinrichtung (140) die von der Erkennungseinrichtung (120) zu dem vorbestimmten Zeilpunkt ausgegebenen Programmidentifizierungsdaten als die gewünschten Programmidentifizierungsdaten gemäß der Speicherungsanforderung von der Zeitgebereinrichtung (190) speichert;
die Vergleichseinrichtung (150) nacheinander die von der Erkennungseinrichtung (120) zu einem Zeitpunkt danach ausgegebenen Programmidentifizierungsdaten mit den Programmidentifizierungsdaten zu dem vorbestimmten Zeitpunkt vergleicht;
die Steuereinrichtung (170) einen Aufnahmebetrieb der Aufnahmevorrichtung (180) gemäß einer Aufnahmeanforderung von der Zeitgebereinrichtung beginnt und die Aufnahmevorrichtung (180) steuert, um ihren Aufnahmebetrieb fortzusetzen, während sie mit einem Koinzidenzausgang von der Vergleichseinheit (150) beliefert wird, und
die Vergleichseinrichtung (150) ein Rücksetzhefehlssignal zum Zurücksetzen eines Speicherinhalts an die Speichereinrichtung (140) liefert, wenn der Koinzidenzausgang nicht erreicht ist.

2. System zum Aufzeichnen von Fernsehprogrammen nach Anspruch 1, dadurch gekennzeichnet, daß die Zeitgebereinrichtung (190) ein Eine-Berührung-Zeitgebervorrichtung ist.

3. System zum Aufzeichnen von Fernsehprogrammen mit
einer Erkennungseinrichtung (120) zum Empfangen eines Fernsehsignals, das Programmidentifizierungsdaten hat, die auf einem vorbestimmten Teilbereich davon überlagert sind, und zum Erkennen der Programmidentifizierungsdaten;
einer Speichereinrichtung (140) zum Speichern von gewünschten Programmidentifizierungsdaten zum Aufnehmen des Fernsehsignals;
einer Vergleichseinrichtung (150) zum Vergleichen der gewünschten Programmidentifizierungsdaten von der Speichereinrichtung (140) mit den Programmidentifizierungsdaten von der Erkennungseinrichtung (120);
einer Steuereinrichtung (170) zum Steuern eines Betriebs einer Empfangsvorrichtung (180) zum Aufnehmen des Fernsehsignals gemäß einem Ausgang der Vergleichseinrichtung (150), worin
das System zum Aufnehmen von Fernsehprogrammen ferner eine Auslösereinrichtung (190) zum Liefern einer Speicherungsanforderung an die Speichereinrichtung (140) aufweist;
die Speichereinrichtung (140) die Programmidentifizierungsdaten von der Erkennungseinrichtung (120) als die gewünschten Programmidentifizierungsdaten als Reaktion auf die Speicherungsanforderung, die von der Auslösereinrichtung (190) geliefert ist, speichert;
die Vergleichseinrichtung (150) Programmidentifizierungsdaten, die von der Erkennungseinrichtung (120) nacheinander ausgegeben werden, mit den Programmidentifizierungsdaten von der Speichereinrichtung (140) vergleicht;
die Steuereinrichtung (170) die Aufnahmevorrichtung (180) steuert, um einen Aufnahmebetrieb fortzusetzen, während eine Steuereinrichtung (170) mit einem Koinzidenzausgang von der Vergleichseinrichtung (150) beliefert gehalten wird; und
die Vergleichseinrichtung (150) die Speichereinrichtung (140) mit einem Rücksetzsignal zum Rücksetzen von Speicherinhalten in der Speichereinrichtung (140) beliefert, wenn der Koinzidenzausgang nicht erreicht ist.

## Revendications

1. Système d'enregistrement de programmes de télévision comprenant :
un moyen détecteur (120) pour recevoir un signal de télévision sur une partie prédéterminée duquel sont superposées des données d'identification de programme et détecter lesdites données d'identification de programme,
un moyen de mémoire (140) pour mémoriser des données d'identification de programme voulu destinées à l'enregistrement dudit signal de télévision,
un moyen comparateur (150) pour comparer lesdites données d'identification de programme voulu provenant dudit moyen de mémoire (140) auxdites données d'identification de programme provenant dudit moyen détecteur (120),
un moyen de commande (170) pour commander une opération d'un dispositif d'enregistrement (180) destiné à enregistrer ledit signal de télévision conformément au signal de sortie dudit moyen comparateur (150),
un moyen d'horloge (190) pour fournir un signal de déclenchement de début pour une demande d'enregistrement et une demande mémorisation audit moyen de commande (170) et audit moyen de mémoire (140) à un temps de synchronisation prédéterminé,
dans lequel :
ledit moyen de mémoire (140) mémorise lesdites données d'identification de programme sorties dudit moyen détecteur (120) audit temps de synchronisation prédéterminé en tant que dites données d'identification de programme voulu, conformément à ladite demande de mémorisation provenant dudit moyen d'horloge (190) ;
ledit moyen comparateur (150) compare séquentiellement lesdites données d'identification de programme sorties dudit moyen détecteur (120) à un temps de synchronisation suivant auxdites données d'identification de programme audit temps de synchronisation prédéterminé ;
ledit moyen de commande (170) commence une opération d'enregistrement dudit dispositif d'enregistrement (180) conformément à une demande d'enregistrement provenant dudit moyen d'horloge et commande ledit dispositif d'enregistrement (180) pour continuer ladite opération d'enregistrement de celui-ci tout en recevant un signal de coïncidence de sortie dudit moyen comparateur (150), et,
ledit moyen comparateur (150) fournit un signal de commande de remise à l'état initial destiné à remettre à l'état initial un contenu de mémoire audit moyen de mémoire (140) quand ledit signal de coïncidence de sortie n'est pas obtenu.

2. Système d'enregistrement de programmes de télévision selon la revendication 1, caractérisé en ce que ledit moyen d'horloge (190) est un dispositif d'horloge à une touche.

3. Système d'enregistrement de programmes de télévision, comprenant :
un moyen détecteur (120) pour recevoir un signal de télévision sur une partie prédéterminée duquel sont superposées des données d'identification de programme, et pour détecter lesdites données d'identification de programme ;
un moyen de mémoire (140) pour mémoriser des données d'identification de programme voulu destinées à l'enregistrement dudit signal de télévision ;
un moyen comparateur (150) pour comparer lesdites données d'identification de programme voulu provenant dudit moyen de mémoire (140) auxdites données d'identification de programme provenant dudit moyen détecteur (120) ; et,
un moyen de commande (170) pour commander une opération d'un dispositif d'enregistrement (180) destiné à enregistrer ledit signal de télévision conformément au signal de sortie dudit moyen comparateur (150),
dans lequel
ledit système d'enregistrement de programmes de télévision comprend en outre un moyen de déclenchement (190) pour fournir une demande de mémorisation audit moyen de mémoire (140) ;
ledit moyen de mémoire (140) mémorise lesdites données d'identification de programme provenant dudit moyen détecteur (120) en tant que dites données d'identification de programme voulu, en réponse à la demande de mémorisation fournie par ledit moyen de déclenchement (190) ;
ledit moyen comparateur (150) compare des données d'identification de programme sorties ensuite dudit moyen détecteur (120) auxdites données d'identification de programme provenant dudit moyen de mémoire (140) ;
ledit moyen de commande (170) commande le dispositif d'enregistrement (180) pour continuer une opération d'enregistrement alors que le moyen de commande (170) continue à recevoir un signal de coïncidence de sortie du moyen comparateur (150) ; et,
ledit moyen comparateur (150) fournit audit moyen de mémoire (140) un signal de remise à l'état initial destiné à remettre à l'état initial des contenus de mémoire dans le moyen de mémoire (140), quand ledit signal de coïncidence de sortie n'est pas obtenu.
